# EUROPÄISCHE PATENTSCHRIFT

(11) **EP 3 042 156 B1**
(45) Veröffentlichungstag und Bekanntmachung des Hinweises auf die Patenterteilung: **27.09.2017**
(21) Anmeldenummer: 14808886.7
(22) Anmeldetag: 27.11.2014
(51) Int. Cl.: G01F 1/66, G01N 15/00, G01N 15/06, G01N 15/10, G01S 13/46, G01S 13/58, G01S 13/90

(54) **DETEKTIONSVERFAHREN ZUM LOKALISIEREN EINES PARTIKELS UND VORRICHTUNG ZUM DURCHFÜHREN EINES SOLCHEN VERFAHRENS**
DETECTION METHOD FOR LOCATING A PARTICLE AND A DEVICE FOR EXECUTING A METHOD OF THIS TYPE
PROCÉDÉ DE DÉTECTION POUR LA LOCALISATION D'UNE PARTICULE, ET DISPOSITIF POUR LA MISE EN OEUVRE D'UN TEL PROCÉDÉ

(30) Priorität: 29.11.2013 DE 102013224507
(43) Veröffentlichungstag der Anmeldung: 13.07.2016
(73) Patentinhaber: Siemens Aktiengesellschaft, 80333 München (DE)
(72) Erfinder: HACKSTEIN, Holger, 63128 Dietzenbach (DE); MORHART, Christian, 93083 Obertraubling / Niedertraubling (DE); POPRAWA, Florian, 81825 München (DE); ZIROFF, Andreas, 81671 München (DE); ZOEKE, Dominik Marco, 90461 Nürnberg (DE)
(86) Internationale Anmeldenummer: PCT/EP2014/075795
(87) Internationale Veröffentlichungsnummer: WO 2015/078960

(56) Entgegenhaltungen:
- EP-A1- 2 618 179
- EP-A2- 0 802 427
- WO-A1-2011/076346
- US-B1- 8 044 846

## Beschreibung

Die Erfindung betrifft ein Detektionsverfahren zum Lokalisieren wenigstens eines sich in einer Strömung bewegenden Partikels nach dem Oberbegriff von Patentanspruch 1. Die Erfindung betrifft ferner eine Detektionsvorrichtung gemäß dem Oberbegriff von Patentanspruch 10.

In vielerlei Situationen spielt die Detektion und Lokalisierung von Partikeln in einer Strömung, sowie Partikelansammlungen erhöhter Konzentration in Strömungen, eine große Rolle. Ein beispielhaftes Problemszenario findet sich in der Überwachung und Steuerung von Verbrennungsprozessen. Für einen optimalen Verbrennungsprozess ist hier in einem Luftstrom eine zeitlich homogene Massekonzentration des zugeführten Stoffes erforderlich. Mechanische und strömungsdynamische Effekte führen jedoch regelmäßig zur Bildung von Inhomogenitäten, sog. Partikelsträhnen, und somit zu einer inhomogenen Verteilung des Massestroms. Zur möglichen Einleitung von Gegenmaßnahmen müssen derartige Inhomogenitäten erkannt und idealerweise deren Position bestimmt werden.

Zur Messung von Volumen- bzw. Massestrom ohne direktes Einbringen einer Messapparatur in den Luftstrom sind Systeme auf Basis von Ultraschall- und Mikrowellensensoren üblich. Information über Volumen- und Masseverteilung wird dabei aus dem Verhältnis absorbierter zu reflektierter Signalleistung, oder, im Falle mehrerer kohärenter Sensoren, transmittierter Leistung, sowie aus Laufzeitmessung gewonnen. Dabei stützen sich insbesondere Mikrowellensysteme für gewöhnlich auf eine Leistungsmessung. Bei einem Auftreten von inhomogenen Stoffkonzentrationen, z.B. durch Strähnenbildung, treten hierbei vermehrt Messfehler auf.

Es ist die Aufgabe der vorliegenden Erfindung, die räumliche Auflösungsfähigkeit eines Systems zur Partikelmessung, insbesondere eines Mikrowellensystems, zu verbessern.

Diese Aufgabe wird erfindungsgemäß durch ein Verfahren und eine Vorrichtung gemäß den unabhängigen Patentansprüchen gelöst. Vorteilhafte Ausführungsformen ergeben sich aus den abhängigen Patentansprüchen, der Beschreibung und den Figuren.

Ein erfindungsgemäßes Detektionsverfahren zum Lokalisieren wenigstens eines sich in einer Strömung bewegenden Partikels umfasst die Schritte eines Aussendens eines Sendesignals durch einen Sender und ein Empfangen eines reflektierten, im Vergleich zum Sendesignal frequenz- und phasenmodulierten Empfangssignals durch einen Empfänger. Um die räumliche Auflösungsfähigkeit zu verbessern ist hier vorgesehen, anschließend ein Falten des Empfangssignals mit wenigstens einem eine konjugierte, geschätzte Kanalimpulsantwort repräsentierenden Kernel oder (Integrations-)Kern zu einer rekonstruierten Partikelpositionsfunktion durchzuführen, und aus der rekonstruierten Partikelpositionsfunktion eine Position des Partikels zu bestimmen. Umgekehrt beschreibt also eine Faltung des Kernels oder Integrationskerns mit einer idealen Partikelpositionsfunktion das Empfangssignal. Im Folgenden werden die Begriffe Kernel, Kern und Integrationskern synonym verwendet. Insbesondere kann es sich bei Sende- und Empfangssignal um Mikrowellensignale handeln. Ein wesentlicher Vorteil des beschriebenen Verfahrens ist das verwendete deterministische Signalmodell, welches eine hohe Anpassbarkeit an verschiedene Situationen ermöglicht. Es können auch gezielt einzelne Positionen im Strom "beleuchtet" werden, also gezielt der zu einer gewissen Position passende Kernel für die Faltung verwendet werden. Somit können also gezielt und genau bestimmte räumliche Bereiche analysiert werden und entsprechend Partikel, welche dort lokalisiert sind, detektiert werden. Ein weiterer Vorteil ist, dass die Verarbeitung direkt in ein konkretes Abbild der Ortskoordinaten mündet, sodass auch eine manuelle, visuelle Interpretation möglich ist. Werden mehrere Sensoren zur mehrdimensionalen Lokalisierung oder einfach zur Erhöhung der Detektionssicherheit oder Detektionsgenauigkeit verwendet, ist keine phasen- oder frequenzgenaue Kohärenz der Sensoren und damit kein Justieren der Sensoren untereinander nötig, da das Verfahren ausschließlich Daten jeweils eines einzelnen Sensors auswertet. Eine Erweiterung des Verfahrens um zusätzliche Sensoren bzw. um die Daten zusätzlicher Sensoren ist also einfach durchführbar. Zudem setzt das Verfahren keine spezielle Sendesignalform oder Sensorarchitektur voraus. Es genügt ein monofrequenter Einkanalsensor, welcher mit geringem Schaltungsaufwand und damit kostengünstig realisierbar ist. Bei komplexeren Architekturen, beispielsweise einem Sensor mit einer frequencymodulated continuous-wave (FMCW)-Signalform, kann das Verfahren hingegen ebenfalls angewandt werden. Auf Grund zusätzlicher Möglichkeiten der Signalverarbeitung ist dann eine entsprechend höhere Leistungsfähigkeit, sprich eine geringere Fehl- und Falschdetektionsrate und eine höhere Lokalisierungsgenauigkeit zu erwarten. Vorteilhaft ist außerdem, dass sich die benötigten Faltungsoperationen kompakt im Frequenzbereich darstellen und effizient mit logarithmischer Komplexität durchführen lassen.

In einer bevorzugten Ausführungsform ist vorgesehen, dass das Falten mehrfach, und zwar jeweils mit je einem unterschiedlichen Kernel einer Kernelschar durchgeführt wird, wobei ein Kernel der Schar je einer unterschiedlichen erwarteten Partikel-Positionsfunktion entspricht, und das Bestimmen der Position aus der erhaltenen Schar rekonstruierter Partikel-Positionsfunktionen heraus erfolgt. Das hat den Vorteil, dass nicht nur einzelne Positionen im Strom analysiert werden, sondern auch mehrere Positionen analysiert werden oder auch gezielt gewisse Positionen ausgeblendet, also nicht analysiert werden können. Die Zahl und Form der Kernelfunktionen ist zudem variabel und die Kernel liegen per se in separierter Form vor, so dass das Verfahren je nach gewünschter Auflösungsfähigkeit und verfügbarer Rechenleistung auch skaliert und parallelisiert werden kann.

Hier ist in einer weiteren Ausführungsform vorgesehen, dass die Kernel jeweils Partikel-Positionsfunktionen zugeordnet sind, welche jeweils Partikelpositionen beschreiben, die in der Strömung entlang einer Hauptbewegungsrichtung der Partikel verteilt sind, insbesondere zumindest im Wesentlichen parallel zu einer Hauptbewegungsrichtung der Partikel. Das hat den Vorteil, dass die erwarteten Inhomogenitäten, welche sich in Form von Partikelsträhnen entlang der Hauptbewegungsrichtung der Partikel in der Strömung ausbilden, besonders effizient identifiziert werden können.

In einer weiteren Ausführungsform ist vorgesehen, dass das Bestimmen der Position ein Überlagern der rekonstruierten Partikel-Positionsfunktionen beinhaltet, insbesondere ein Überlagern der rekonstruierten Partikel-Positionsfunktionen zu einem zwei- oder dreidimensionalen-Bild in Ortskoordinaten. Das hat den Vorteil, dass eine automatische Partikeldetektion auf Basis solcher Bilder einfach ableitbar und beliebig erweiterbar ist. Dazu sind vielfältige Methoden der Bildverarbeitung und Mustererkennung, und zwar statistische wie auch deterministische Methoden, denkbar und sinnvoll. Es ist natürlich besonders einfach auch eine manuelle, visuelle Interpretation möglich.

In einer besonders vorteilhaften Ausführungsform ist vorgesehen, dass das Detektionsverfahren auf einen Partikelstrom, also eine Vielzahl von Partikeln, welche sich in einer Strömung bewegen, angewandt wird und nach dem Bestimmen der Positionen von Partikeln des Partikelstroms ein extrahieren derjenigen Positionen von Partikeln erfolgt, welche auf Grund einer angenommenen, vorbestimmten statistisch abhängigen Verteilung zusammengehörig sind, und diese Positionen auf eine Wahrscheinlichkeitsfunktion abgebildet werden. Hier ist ein wesentlicher Vorteil, dass das verwendete deterministische Signalmodell zusätzlich zu der hohen Anpassbarkeit an verschiedene Situationen auch Rückschlüsse auf das Verhalten der vorliegenden Partikelverteilung ermöglicht. Folgt die Partikelverteilung einem rein stochastischen Prozess, so ist die Abweichung von dem eigens definierten, deterministischen Modell in dem Ergebnis des Verfahrens deutlich erkennbar. Wird in dem Verfahren ein konkretes Abbild in Ortskoordinaten erstellt, so ist auch die Detektion von strähnenförmigen Inhomogenitäten in der Strömung auf Basis der Bilder einfach mit den vielfältigen Methoden der Bildverarbeitung und Mustererkennung durchführbar.

Hier kann insbesondere vorgesehen sein, dass anhand der Wahrscheinlichkeitsfunktion ein Bestimmen erfolgt, ob eine inhomogene Verteilung der Partikel innerhalb des Partikelstroms vorliegt, und, falls ja, dass anhand zumindest eines Maximums der Wahrscheinlichkeitsfunktion, insbesondere des absoluten Maximums, ein Lokalisieren der Inhomogenität erfolgt. Das hat den Vorteil, dass ein Lokalisieren der Inhomogenität bzw. der Partikelsträhne besonders leicht automatisierbar und entsprechend effizient durchführbar ist.

Gemäß einer weiteren Ausführungsform ist vorgesehen, dass Empfangssignal und/oder Kernel, also Faltungskerne, komplexwertig gewählt werden. Das hat den Vorteil, dass die Zahl von virtuellen Positionen von Partikeln abnimmt, d.h. die Menge an durch die Faltung induzierten Interferenzen zwischen den unterschiedlichen Funktionen bei vielen Partikeln für eine bildbasierte Nachverarbeitung deutlich reduziert ist, d.h. besser beherrschbar ist. Unter virtueller Position eines Teilchens wird hier also eine "unechte" Teilchenposition verstanden, an der das Verfahren die Existenz eines Teilchens nahelegt obwohl sich dort keines befindet, ein sogenanntes "falsches Positiv".

In einer weiteren Ausführungsform ist vorgesehen, dass je ein spektrales Verjüngen von Empfangssignal oder Kernel vorgenommen wird. Das hat den Vorteil, dass die Welligkeit des Faltungsergebnisses, welche durch eine Bandbegrenzung einer Modulation hervorgerufen ist, reduziert wird. Wieder reduziert dies die Anzahl der virtuellen Partikelpositionen oder virtuellen Punkte bzw. den in einem zwei- oder dreidimensionalen Bild in Ortskoordinaten auftretenden möglichen Partikelpositionen und verbessert die Partikelsichtbarkeit in solch einer Darstellung in der Bewegungsrichtung der Partikel erheblich.

Zusätzlich kann hier vorgesehen sein, dass nach dem Verjüngen ein Hochpassfiltern von Empfangssignal und/oder Kernel erfolgt. Das hat den Vorteil, dass so das Auflösungsvermögen in einer Richtung senkrecht zu der Bewegungsrichtung der Partikel verbessert wird.

Die Erfindung beinhaltet ferner eine Detektionsvorrichtung zum Lokalisieren wenigstens eines sich in einer Strömung bewegenden Partikels, mit einem Sensor zum Aussenden eines Sendesignals und zum Erfassen eines Empfangssignals, und mit einer Auswerteeinheit, wobei mittels der Auswerteeinheit eine Frequenz und eine Phase des Empfangssignals erfassbar ist, sowie mittels der Auswerteeinheit das Empfangssignal mit wenigstens einem, eine konjugierte, geschätzte Kanalimpulsantwort repräsentierenden Kernel zu einer rekonstruierten Partikelpositionsfunktion faltbar und eine Position des Partikels aus der rekonstruierten Partikel-Positionsfunktion bestimmbar ist. Insbesondere kann hier ein Mikrowellensensor zum Einsatz kommen.

Weitere Merkmale der Erfindung ergeben sich aus der folgenden Beschreibung bevorzugter Ausführungsbeispiele der Erfindung, sowie anhand der Figuren. Dabei zeigen:
- FIG 1: eine beispielhafte Situation für ein Anwenden einer Ausführungsvariante des erfindungsgemäßen Verfahrens;
- FIG 2: ein beispielhaftes, der in FIG 1 gezeigten Situation entsprechendes frequenz- und phasenmoduliertes Empfangssignal;
- FIG 3: einen schematischen Überblick über ein Ausführungsbeispiel des erfindungsgemäßen Verfahrens mit mehreren verwendeten Kerneln;
- FIG 4: ein Simulationsergebnis für einen Partikelstrom, in welchem mit einer Ausführungsform der Erfindung eine Inhomogenität lokalisiert werden kann; und
- FIG 5: eine aus dem Beispiel in FIG 4 extrahierte Wahrscheinlichkeitsfunktion.

In den FIG werden gleiche oder funktionsgleiche Elemente mit den gleichen Bezugszeichen versehen.

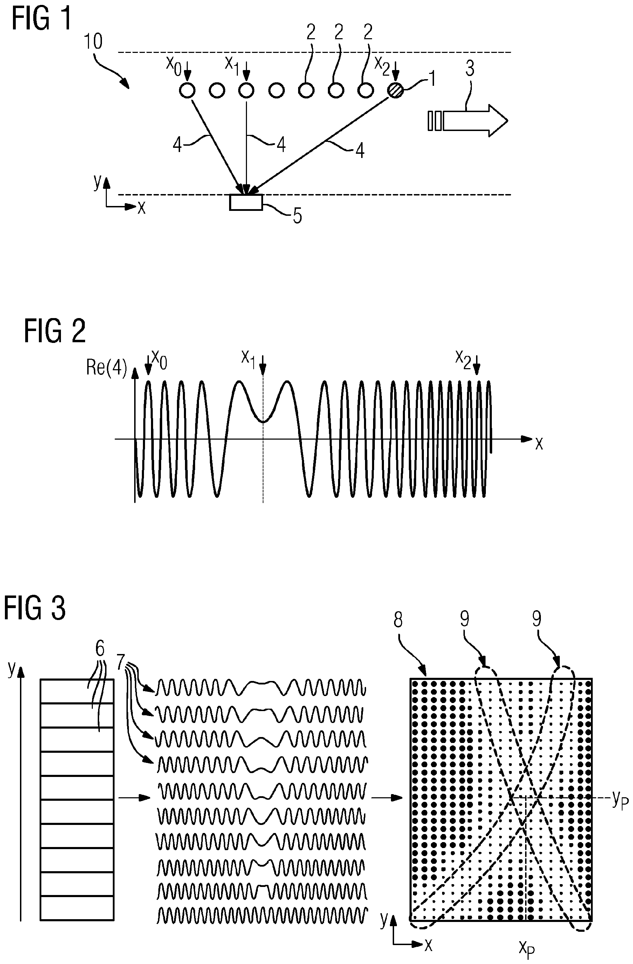

In FIG 1 ist eine beispielhafte Situation für einen typischen Anwendungsfall einer Ausführungsvariante des erfindungsgemäßen Verfahrens dargestellt. In einem Strömungskanal 10 bewegt sich hier ein Partikel 1 parallel zu einer Hauptströmungsrichtung 3, welche durch einen Pfeil symbolisiert ist, an einem Sensor 5 vorbei. Dabei nimmt das Partikel 1 nacheinander unterschiedliche Positionen 2 ein, die im gezeigten Beispiel sämtlich parallel zur Hauptströmungsrichtung 3 verteilt sind. Neben der augenblicklichen Position x₂ des Partikels 1 sind hier noch zwei frühere Positionen x₀ und x₁ des Partikels 1 gesondert markiert. Die Position x₀ wird also hier durch das Partikel 1 zeitlich vor der Position x₁ eingenommen, welche wiederum vor der augenblicklichen Position x₂ eingenommen wird. In allen Positionen, welche das Partikel 1 einnimmt, reflektiert es ein Empfangssignal 4 in Richtung des Sensors 5. Der radiale Anteil der Bewegung des Partikels relativ zu dem Sensor 5, der beispielsweise ein Mikrowellensensor ist, erzeugt auf Grund des Dopplereffekts eine Frequenzverschiebung des reflektierten Empfangssignals 4. Mit fortschreitender Bewegung des Partikels 1 in Hauptströmungsrichtung 3 ändert sich der Aspektwinkel relativ zu dem Sensor 5 und folglich die Radialkomponente der Geschwindigkeit relativ zu dem Sensor 5, sowie als Folge die resultierende Dopplerverschiebung. Während des "Vorbeiflugs" des Partikels 1 erfährt das reflektierte Empfangssignal 4 somit eine kontinuierliche Frequenz- und Phasenmodulation (vgl. FIG 2) welche charakteristisch und eindeutig für die zurückgelegte Trajektorie des Partikels 1, also sämtlicher zuvor eingenommenen Positionen 2 des Partikels 1 sowie seiner augenblicklichen Position, ist.

FIG 2 zeigt ein beispielhaftes, der in FIG 1 gezeigten Situation entsprechendes frequenz- und phasenmoduliertes Empfangssignal 4. Aufgetragen ist hier der Realteil des Empfangssignals 4 über einer x-Achse. Wie in FIG 1 zu sehen, ist die x-Achse parallel zur Hauptströmungsrichtung 3 orientiert. Es ist leicht zu erkennen, dass in den drei Positionen x₀, x₁ und x₂, welche den in FIG 1 gezeigten Positionen x₀, x₁ und x₂ entsprechen, jeweils eine verschiedene Phasen- und Frequenzmodulation vorliegt. Das Empfangssignal 4 entsteht also mathematisch betrachtet durch eine Faltung einer Kanalimpulsantwort oder Impulsantwort mit einer Partikelpositionsfunktion. Zur Rekonstruktion der Position x₀, x₁, x₂ etc. des Partikels 1 wird hier das inverse Problem gelöst, und zwar durch ein Entfalten mit einer konjugierten, geschätzten Impulsantwort, welche durch den Kernel dargestellt ist.

Das zu Grunde liegende Prinzip der Dopplermodulation durch Zielbewegung ist bekannt und findet sich im Zusammenhang mit bildgebenden Verfahren z.B. häufig im Bereich der Marine und Luftwaffe unter der Bezeichnung "Inverse Synthetische Apertur - Radar" wieder. Dort wird die Zielposition jedoch als bekannt vorausgesetzt bzw. explizit gemessen, zudem befinden sich die Abmessungen der betrachteten Objekte dort in deutlich größeren, für beispielsweise Mikrowellen prinzipiell geeigneteren Dimensionen, so dass dort gänzlich andere Problematiken eine Rolle spielen.

FIG 3 zeigt einen schematischen Überblick über ein Ausführungsbeispiel des erfindungsgemäßen Verfahrens unter Verwendung mehrerer Kernel.

In der gezeigten Ausführungsform wird eine signalangepasste Filterbank auf Grundlage einer Schar von Kernelfunktionen oder Kerneln 7 entworfen, welche einer Teilmenge der erwarteten Partikelbahnen, d.h. der erwarteten Partikelpositions-Funktionen und dem entsprechenden phasenmodulierten Empfangssignal 4, entsprechen. Hierzu wird zunächst der Strömungskanal 10 in eine Mehrzahl von Schnitten 6 aufgeteilt, welche im gezeigten Beispiel alle in γ-Richtung, also senkrecht zur Hauptströmungsrichtung 3, eine gleich große Ausdehnung aufweisen. Gleichzeitig bedeckt jeder Schnitt 6 im gezeigten Beispiel jeweils den kompletten Strömungskanal 10 in x-Richtung, also parallel zur Hauptströmungsrichtung 3 ab. Im Prinzip können hier jedoch die Schnitte 6 beliebig gewählt werden. Wichtig ist eine korrekte Zuordnung der Kernel 7, wie sie in der Mitte von FIG 3 gezeigt ist. Dort sehen wir eine Vielzahl von Kerneln 7, welche jeweils dem direkt links neben ihnen zu sehenden Schnitt 6 entsprechen. Diese Kernel 7 werden jeweils mit dem im vorliegenden Beispiel einen Empfangssignal 4 zu einer Partikel-Positionsfunktion gefaltet. Die einzelnen Ergebnisse des Faltens werden im gezeigten Beispiel zu einem zweidimensionalen Bild 8 zusammengefügt. Dabei werden die Ergebnisse entsprechend der Anordnung der Schnitte 6 bzw. der Kernel 7 sortiert, wodurch sich eine ortsgetreue Abbildung der Partikel-Positionsfunktionen ergibt. Im gezeigten Beispiel sind hohe Beträge der rekonstruierten Partikel-Positionsfunktion hell dargestellt, geringe Beträge dunkel. Dabei ergeben sich zwei Linien 9, deren Schnittpunkt die Position des Partikels bestimmt. Im vorliegenden Fall ist diese Position mit den Koordinaten x_{P} und y_{P} kenntlich gemacht. Es werden also verschiedene Faltungskerne oder Kernel 7 innerhalb der Strömung gebildet und sämtliche Faltungsergebnisse entsprechenden Quellpositionen zugeordnet und miteinander überlagert, so dass ein beispielsweise zweidimensionales Bild in Ortskoordinaten entsteht. Ein Einzelpartikel erzeugt in diesem Bild typischerweise ein x-förmiges Faltungsergebnis. Maßgeblich für die erzielte Auflösung ist hier die Modulationsbreite und die exakte Nachbildung der Modulationsfunktion im Kernel 7. Das Maximum eines Faltungsergebnisses repräsentiert hier die Position des Partikels in x-Richtung, also in Richtung der Hauptstromrichtung 3, die gewählte Modulationsfunktion im Kernel 7 selbst bestimmt die Richtung in y-Richtung, also senkrecht zur Hauptstromrichtung 3. Eine Abweichung des Phasenzentrums der tatsächlichen Impulsantwort von der geschätzten Impulsantwort äußert sich hier in einem Versatz des Ergebnisses in x-Richtung, eine Abweichung der Modulationsfunktion der tatsächlichen Impulsantwort von der geschätzten Impulsantwort in einem Versatz des Ergebnisses, also der Partikel-Positionsfunktion, in y-Richtung.

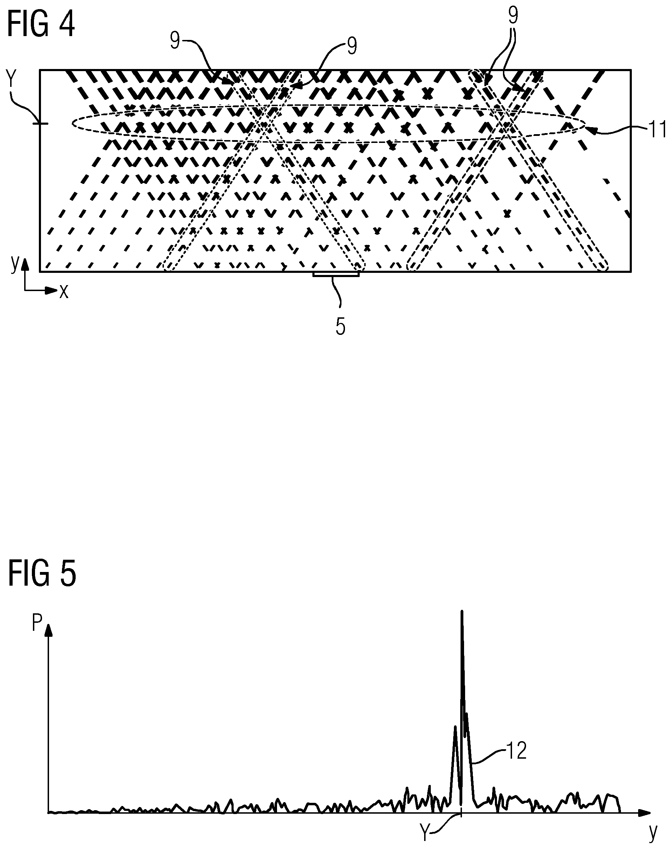

In FIG 4 ist ein Simulationsergebnis für einen Partikelstrom dargestellt, in welchem mit einer Ausführungsform der Erfindung eine Inhomogenität lokalisiert werden kann. Gezeigt sind hier eine Vielzahl von sich kreuzenden Linien 9, welche über den Ortskoordinaten in x- und γ-Richtung aufgetragen sind. Zur besseren Orientierung ist der Ort des Sensors 5 ebenfalls eingetragen. Der Partikelstrom, dessen Partikel 1 hier erfasst und grafisch dargestellt werden, strömt hier also parallel zur x-Richtung an dem Sensor 5 vorbei. Eine homogene Partikelverteilung in der Strömung folgt einem stochastischen Prozess. Im Falle einer Inhomogenität, also insbesondere einer Strähnenbildung, entsteht hier jedoch eine statistische Abhängigkeit der Partikel 1, welche die Strähne bilden, insbesondere in y-Richtung. Entsprechend dem in FIG 3 gezeigten Zusammenhang besteht das Modulationssignal einer solchen Strähne aus einer Überlagerung sämtlicher Frequenz- und Phasenbeiträge der einzelnen Partikel 1. Im Falle einer Strähne 11, wie sie hier gezeigt ist, ergibt sich im rekonstruierten Bild eine Aneinanderreihung von Schnittpunkten von Linien 9. Dabei entstehen bei einem Vorhandensein vieler Partikel 1 auch viele sich kreuzende Linienpaare, welche keine physikalischen Teilchen als Ursache haben. Diese werden auch virtuelle Schnittpunkte oder virtuelle Partikel genannt. Es ist nun möglich, diese virtuellen Partikel durch geeignete Vor- und Nachverarbeitungsschritte zu identifizieren und zu eliminieren. Hierzu ist es z.B. zweckmäßig, Empfangssignale 4 und Kernel 7 komplexwertig zu wählen, da das Falten die Konjugierte der Impulsantwort erfordert. Auch mit reellwertigen Basissignalen sind Partikel 1 zwar detektierbar, die Zahl der virtuellen Partikel bzw. die Menge an "Faltungsinterferenz" bei vielen Partikeln 1 ist jedoch für eine bildbasierte Nachverarbeitung deutlich schwerer zu beherrschen. Auch ist es beispielsweise sinnvoll, eine spektrale Verjüngung von Empfangssignal 4 und Kernel 7 zur Reduktion der Welligkeit des Faltungsergebnisses, welche durch die Bandbegrenzung der Modulation hervorgerufen wird, vorzunehmen. Dies reduziert die Anzahl virtueller Partikel deutlich und verbessert die Partikelsichtbarkeit in einer solchen Darstellung in Querrichtung, also x-Richtung, erheblich. Schließlich kann beispielsweise eine Hochpassfilterung von Empfangssignal 4 und Kernel 7 erfolgen, um die Auflösungsfähigkeit des Verfahrens in γ-Richtung, welche beispielsweise durch eine zuvor vorgenommene Verjüngung, welche eine Gewichtung hin zu einem Gleichanteil verschiebt, verschlechtert wurde, wieder zu verbessern oder dies auch ohne eine zuvor vorgenommene Verjüngung zu tun. Mit diesen Methoden kann dann beispielsweise im gezeigten Beispiel eine Strähne 11 entlang der Position Y identifiziert werden. Somit können beispielsweise wenn es sich um einen Strömungskanal 10 in z.B. einer Zuleitung zum Brenner in einem Kohlekraftwerk handelt, strähnenunabhängige Masseflussbestimmungen durchgeführt, Inhomogenitäten in einem Luft-Kohlestaub-Gemisch detektiert und Gegenmaßnahmen eingeleitet werden, um eine homogene Vermengung wieder herzustellen.

In FIG 5 ist eine aus dem Bild in FIG 4 extrahierte Wahrscheinlichkeitsfunktion 12 dargestellt. Hierbei ist eine relative Wahrscheinlichkeit P über der γ-Richtung, also der Richtung senkrecht zur Hauptstromrichtung 3, aufgetragen. Deutlich zu erkennen ist ein Maximum an der Position Y, welche, wie in FIG 4 gezeigt, die Position der Strähne 11 ist. Somit lässt sich die Position Y der Strähne 11 leicht auch automatisch erkennen. Die gezeigte Wahrscheinlichkeitsfunktion 12 wurde hier erstellt, indem zunächst mit geeigneten bildverarbeitenden Methoden diejenigen Schnittpunkte der Linien 9 extrahiert wurden, welche auf Grund ihrer angenommenen statistisch abhängigen Verteilung zusammengehörig sind, und diese anschließend auf eine Wahrscheinlichkeitsfunktion 12 abgebildet wurden. Diese Wahrscheinlichkeiten dienen dann als Entscheidungsgrundlage für eine Detektion der Strähne 11. Da die Extraktion der Schnittpunkte auf Ortskoordinaten basiert, ist die Entfernung der Strähne 11 bzw. der in dieser Strähne 11 enthaltenen Partikel 1 direkt bekannt. Solle die Strähne 11 nun beispielsweise in einem dreidimensionalen Raum lokalisiert werden, kann unter Zuhilfenahme weiterer, verteilt angeordneter Sensoren mit gleicher Verfahrensweise und beispielsweise durch Triangulation der Entfernungen die Position der Strähne 11 eindeutig im dreidimensionalen Raum bestimmt werden.

## Patentansprüche

1. Detektionsverfahren zum Lokalisieren wenigstens eines sich in einem Strömungskanal (10) in einer Strömung parallel zu einer Hauptströmurigsrichtung (3) bewegenden Partikels (1),
mit den Schritten
- Aussenden eines Sendesignals durch einen Sender (5);
- Empfangen eines reflektierten, im Vergleich zum Sendesignal frequenz- und phasenmodulierten Empfangssignals (4) durch einen Empfänger;
**gekennzeichnet durch** ein anschließendes
- Falten-des Empfangssignals (4) mit wenigstens einem eine konjugierte, geschätzte Kanalimpulsantwort des Strömungskanals (10) repräsentierenden Kernel (7) zu einer rekonstruierten Partikel-Positionsfunktion, und ein
- Bestimmen einer Position (x₀, x₁, x₂) des Partikels (1) aus der rekonstruierten Partikel-Positionsfunktion.

2. Detektionsverfahren nach Anspruch 1,
**dadurch gekennzeichnet, dass**
- das Falten mehrfach mit je einem unterschiedlichen Kernel (7) einer Kernelschar durchgeführt wird, wobei ein Kernel (7) der Schar je einer unterschiedlichen erwarteten Partikel-Positionsfunktion entspricht, und
- das Bestimmen der Position (x₀, x₁, x₂) aus der erhaltenen Schar rekonstruierter Partikel-Positionsfunktionen heraus erfolgt.

3. Detektionsverfahren nach Anspruch 2,
**dadurch gekennzeichnet, dass**
die Kernel (7) jeweils Partikel-Positionsfunktionen zugeordnet sind, welche jeweils Positionen (x₀, x₁, x₂) von einem Partikel (1) beschreiben, die entlang einer Hauptbewegungsrichtung (3) der Strömung verteilt sind.

4. Detektionsverfahren nach Anspruch 2 oder 3,
**dadurch gekennzeichnet, dass**
das Bestimmen der Position (x₀, x₁, x₂) ein Überlagern der rekonstruierten Partikel-Positionsfunktionen beinhaltet, insbesondere ein Überlagern der rekonstruierten Partikel-Positionsfunktionen zu einem zwei- oder drei-dimensionalen Bild in Ortskoordinaten.

5. Detektionsverfahren nach einem der vorherigen Ansprüche, **dadurch gekennzeichnet, dass**
das Detektionsverfahren auf einen Partikelstrom angewandt wird, und nach dem Bestimmen der Positionen (x₀, x₁, x₂) von Partikeln (1) des Partikelstroms ein Extrahieren derjenigen Positionen (x₀, x₁, x₂) von Partikeln (1) erfolgt, welche aufgrund einer angenommenen, vorbestimmten statistisch abhängigen Verteilung zusammengehörig sind, und diese Positionen (x₀, x₁, x₂) auf eine Wahrscheinlichkeitsfunktion (12) abgebildet werden.

6. Detektionsverfahren nach Anspruch 5,
**dadurch gekennzeichnet, dass**
anhand der Wahrscheinlichkeitsfunktion (12) ein Bestimmen erfolgt, ob eine inhomogene Verteilung der Partikel (1) innerhalb des Partikelstroms vorliegt und, falls ja, anhand zumindest eines Maximums der Wahrscheinlichkeitsfunktion (12), insbesondere des absoluten Maximums, ein Lokalisieren der Inhomogenität erfolgt.

7. Detektionsverfahren nach einem der vorherigen Ansprüche, **dadurch gekennzeichnet, dass**
Empfangssignal (4) und/oder Kernel (7) je komplexwertig gewählt werden.

8. Detektionsverfahren nach einem der vorherigen Ansprüche, **dadurch gekennzeichnet, dass**
je ein spektrales Verjüngen von Empfangssignal (4) und/oder Kernel (7) vorgenommen wird.

9. Detektionsverfahren nach Anspruch 8,
**dadurch gekennzeichnet, dass**
nach dem Verjüngen ein Hochpassfiltern von Empfangssignal (4) und/oder Kernel (7) erfolgt.

10. Detektionsvorrichtung zum Lokalisieren wenigstens eines sich in einem Strömungskanal (10) in einer Strömung parallel zu einer Hauptströmungsrichtung (3) bewegenden Partikels (1), mit einem Sensor zum Aussenden eines Sendesignals und zum Erfassen eines Empfangssignals (4), und mit einer Auswerteeinheit,
**dadurch gekennzeichnet, dass**
die Auswerteeinheit so ausgebildet ist, dass sie eine Frequenz und eine Phase des Empfangssignals (4) erfasst, das Empfangssignal (4) mit wenigstens einem eine konjugierte, geschätzte Kanalimpulsantwort des Strömungskanals (10) repräsentierenden Kernel (7) zu einer rekonstruierten Partikel-Positionsfunktion faltet und eine Position (x₀, x₁, x₂) des Partikels aus der rekonstruierten Partikel-Positionsfunktion bestimmt.

## Claims

1. Detection method for localizing at least one particle (1) moving in a flow in a flow channel (10) in a manner parallel to the principal flow direction (3), comprising the following steps:
- emitting a transmission signal by a transmitter (5);
- receiving a reflected reception signal (4), which is frequency- and phase-modulated in comparison with the transmission signal, by a receiver;
**characterized by** subsequently
- convolving the reception signal (4) with at least one kernel (7), which represents a conjugate, estimated channel pulse response of the flow channel (10), to form a reconstructed particle position function and
- determining a position (x₀, x₁, x₂) of the particle (1) from the reconstructed particle position function.

2. Detection method according to Claim 1,
**characterized in that**
- the convolution is carried out a number of times with a different kernel (7) of a family of kernels in each case, wherein a kernel (7) of the family in each case corresponds to a different expected particle position function, and
- the position (x₀, x₁, x₂) is determined from the obtained family of reconstructed particle position functions.

3. Detection method according to Claim 2,
**characterized in that**
the kernels (7) are assigned in each case to particle position functions which in each case describe positions (x₀, x₁, x₂) of a particle (1) which are distributed along a principal movement direction (3) of the flow.

4. Detection method according to Claim 2 or 3,
**characterized in that**
determining the position (x₀, x₁, x₂) contains a superposition of the reconstructed particle position functions, in particular a superposition of the reconstructed particle position functions to form a two-dimensional or three-dimensional image in spatial coordinates.

5. Detection method according to one of the preceding claims, **characterized in that**
the detection method is applied to a particle flow and, after the positions (x₀, x₁, x₂) of particles (1) in the particle flow are determined, those positions (x₀, x₁, x₂) of particles (1) which belong together due to an assumed, predetermined statistically-dependent distribution are extracted and these positions (x₀, x₁, x₂) are mapped onto a probability function (12) .

6. Detection method according to Claim 5,
**characterized in that**
the probability function (12) is used to determine whether there is an inhomogeneous distribution of particles (1) within the particle flow and, should this be the case, the inhomogeneity is localized on the basis of at least one maximum of the probability function (12), in particular the absolute maximum.

7. Detection method according to one of the preceding claims, **characterized in that**
reception signal (4) and/or kernel (7) are each selected to have a complex value.

8. Detection method according to one of the preceding claims, **characterized in that**
spectral tapering of reception signal (4) and/or kernel (7) is undertaken in each case.

9. Detection method according to Claim 8,
**characterized in that**
there is high-pass filtering of reception signal (4) and/or kernel (7) after the tapering.

10. Detection device for localizing at least one particle (1) moving in a flow in a flow channel (10) in a manner parallel to the principal flow direction (3), comprising a sensor for emitting a transmission signal and for detecting a reception signal (4), and comprising an evaluation unit,
**characterized in that**
the evaluation unit is configured in such a way that it detects a frequency and a phase of the reception signal (4), convolves the reception signal (4) with at least one kernel (7) representing a conjugated, estimated channel pulse response of the flow channel (10) to form a reconstructed particle position function, and determines a position (x₀, x₁, x₂) of the particle from the reconstructed particle position function.

## Revendications

1. Procédé de détection pour la localisation d'au moins une particule (1) se déplaçant dans un canal d'écoulement (10) dans un écoulement parallèlement à un dispositif d'écoulement principal (3), comportant les étapes
- d'émission d'un signal d'émission par un émetteur (5) ;
- de réception d'un signal de réception (4) réfléchi, modulé en fréquence et en phase comparativement au signal d'émission, par un récepteur ;
**caractérisé par**
- un repliement subséquent du signal de réception (4) avec au moins un noyau (7) représentant une réponse d'impulsion de canal conjuguée estimée du canal d'écoulement (10) pour obtenir une fonction de position de particule reconstruite, et
- une détermination d'une position (x₀, x₁, x₂) de la particule (1) à partir de la fonction de position de particule reconstruite.

2. Procédé de détection selon la revendication 1, **caractérisé en ce que**
- le repliement est mis en oeuvre à plusieurs reprises avec à chaque fois un noyau (7) différent d'un regroupement de noyaux, un noyau (7) du regroupement correspondant chacun à une fonction de position de particule attendue différente, et
- la détermination de la position (x₀, x₁, x₂) s'effectue à partir du regroupement obtenu de fonctions de position de particule reconstruites.

3. Procédé de détection selon la revendication 2, **caractérisé en ce que** les noyaux (7) sont associés respectivement à des fonctions de position de particule, lesquelles décrivent respectivement des positions (x₀, x₁, x₂) d'une particule (1) qui sont réparties le long d'une direction de déplacement principale (3) de l'écoulement.

4. Procédé de détection selon la revendication 2 ou la revendication 3, **caractérisé en ce que** la détermination de la position (x₀, x₁, x₂) inclut une superposition des fonctions de position de particule reconstruites, en particulier une superposition des fonctions de position de particule reconstruites pour obtenir une image en deux ou trois dimensions en coordonnées de lieu.

5. Procédé de détection selon l'une des revendications précédentes, **caractérisé en ce que** le procédé de détection est appliqué sur un flux de particules, et après la détermination des positions (x₀, x₁, x₂) de particules (1) du flux de particules s'effectue une extraction de ces positions (x₀, x₁, x₂) de particules (1), lesquelles vont de pair en vertu d'une répartition statistiquement dépendante prédéfinie, supposée, et ces positions (x₀, x₁, x₂) sont représentées sur une fonction de probabilité (12).

6. Procédé de détection selon la revendication 5, **caractérisé en ce qu'**une détermination s'effectue à l'aide de la fonction de probabilité (12) s'il existe une répartition inhomogène des particules (1) à l'intérieur du flux de particules et, si tel est le cas, une localisation de l'inhomogénéité s'effectue à l'aide d'au moins un maximum de la fonction de probabilité (12), en particulier du maximum absolu.

7. Procédé de détection selon l'une des revendications précédentes, **caractérisé en ce que** le signal de réception (4) et/ou le noyau (7) sont choisis chacun à valeurs complexes.

8. Procédé de détection selon l'une des revendications précédentes, **caractérisé en ce qu'**il est procédé respectivement à un rétrécissement spectral du signal de réception (4) et/ou du noyau (7).

9. Procédé de détection selon la revendication 8, **caractérisé en ce qu'**après le rétrécissement s'effectue un filtrage passe-haut du signal de réception (4) et/ou du noyau (7).

10. Dispositif de détection pour la localisation d'au moins une particule (1) se déplaçant dans un canal d'écoulement (10) dans un écoulement parallèlement à une direction d'écoulement principale (3), avec un capteur pour l'émission d'un signal d'émission et pour la capture d'un signal de réception (4), et avec une unité d'évaluation, **caractérisé en ce que**
l'unité d'évaluation est conçue de telle sorte qu'elle capte une fréquence et une phase du signal de réception (4),
replie le signal de réception (4) avec au moins un noyau (7) représentant une réponse d'impulsion de canal conjuguée estimée du canal d'écoulement (10) pour obtenir une fonction de position de particule reconstruite et détermine une position (x₀, x₁, x₂) de la particule à partir de la fonction de position de particule reconstruite.
